# EUROPÄISCHE PATENTSCHRIFT

(11) **EP 3 587 539 B1**
(45) Veröffentlichungstag und Bekanntmachung des Hinweises auf die Patenterteilung: **07.07.2021**
(21) Anmeldenummer: 19178844.7
(22) Anmeldetag: 06.06.2019
(51) Int. Cl.: B05B 7/00, F17D 3/12, F16L 55/07, F16L 41/16, F16L 41/02, F16L 41/00, C10L 3/00

(54) **IMPFSYSTEM UND VERFAHREN ZUM ENTNEHMEN EINER IMPFDÜSE AUS EINEM SOLCHEN IMPFSYSTEM**
INJECTION SYSTEM AND METHOD FOR REMOVING A NOZZLE FROM SUCH SYSTEM
SYSTÈME D'INJECTION ET PROCÉDÉ DE RETRAIT D'UNE BUSE D'UN TEL SYSTÈME

(30) Priorität: 29.06.2018 DE 102018115845
(43) Veröffentlichungstag der Anmeldung: 01.01.2020
(73) Patentinhaber: Bilfinger EMS GmbH, 49661 Cloppenburg (DE)
(72) Erfinder: Fischer, Peter, 61197 Florstadt (DE); Kubatz, Axel, 35460 Staufenberg (DE)
(74) Vertreter: Gramm, Lins & Partner Patent- und Rechtsanwälte PartGmbB

(56) Entgegenhaltungen:
- EP-A1- 3 078 894
- DE-A1- 4 006 906
- DE-U1-202018 103 234
- US-A- 3 025 464
- US-A- 5 304 327

## Beschreibung

Die Erfindung betrifft ein Impfsystem für ein Rohr für Druck-Gas, insbesondere für komprimiertes Erdgas, mit einer Impfstelle, die eine Impfdüse und ein Kopfteil, an dem sich die Impfdüse abstützt, aufweist.

Derartige Impfsysteme sind aus der US 5 304 327 A bekannt. Sie besitzen eine Impfstelle und werden verwendet, um Druck-Gas, beispielsweise Erdgas, ein Odoriermittel zuzugeben. Dadurch wird erreicht, dass Gaslecks vom Menschen leichter bemerkt werden können. Ein Impfsystem könnte daher auch als Gasodoriersystem bezeichnet werden.

Dazu wird durch die Impfdüse ein Odoriermittel in den Strom des Druck-Gases abgegeben. Impfstellen sind sehr langlebig und werden daher bislang nicht oder nur selten gewartet. Es hat sich jedoch herausgestellt, dass auch Impfdüsen dem Verschleiß unterliegen und daher regelmäßig inspiziert und/oder ausgetauscht werden müssen.

Dieses Inspizieren der Impfdüsen ist jedoch problematisch. So steht das Druck-Gas häufig unter einem relevanten Gasdruck, typischerweise der Nenndruckstufe PN16, teilweise mehr als 80 bar. Ein erfindungsgemäßes Verfahren wird bevorzugt an einem Rohr durchgeführt, bei dem das Druck-Gas einen derartig hohen Gas-Druck hat. Um die Impfdüse zu entnehmen, darf jedoch kein Überdruck anliegen. Daher wird das Rohr im Bereich um die Impfstelle abgesperrt. Die Zeit, die das Rohr abgesperrt werden kann, ohne dass ein wirtschaftlicher Schaden auftritt, ist jedoch begrenzt, daher muss das Austauschen der Impfdüse schnell und sicher erfolgen. Vielfach ist ein Absperren der Gasleitung nicht möglich, sodass auf eine Wartung der Impfdüse verzichtet werden muss.

Aus der nachveröffentlichten DE 20 2018 103 234 U1 ist eine Odorierungsvorrichtung zum Odorieren eines in einer Gasleitung geführten Gases bekannt, die eine Wechselschleuse aufweist. Diese ermöglicht ein Kompensieren des Druckunterschiedes zwischen Leitungsdruck und Umgebungsdruck bei der Entnahme und dem Einsetzen der Odorierungsdüse, was das Austauschen der Odorierungsdüse vereinfacht.

Aus der US 3 025 464 A ist eine Vorrichtung bekannt, mittels der ein kapazitiver Sensor vollständig aus einer Erdölleitung herausgezogen werden kann. Nachteilig an einem derartigen System ist der große Platzbedarf bei dessen Betrieb.

Aus der EP 3078894A ist eine Einführvorrichtung zur Positionierung einer Probesonde innerhalb eines Rohrs bekannt. Diese Vorrichtung umfasst eine Führung, einen Absperrhahn und eine Probesonde, die als Spindel ausgebildet ist.

Der Erfindung liegt die Aufgabe zugrunde, die Wartung von Impfdüsen zu ermöglichen oder zu verbessern.

Die Erfindung löst das Problem durch ein gattungsgemäßes Impfsystem, bei dem die Impfstelle einen Absperrhahn aufweist und die Impfdüse durch den Absperrhahn in die Gasleitung verläuft und sich entlang einer Impfstellen-Längsachse erstreckt. Das Impfsystem besitzt zudem eine Impfdüsen-Entnahmevorrichtung, die ein Gestell zum reversiblen Befestigen der Impfdüsen-Entnahmevorrichtung an der Impfstelle und ein Schraubgetriebe, das eine Spindel und einen Spindelkopf hat, aufweist, wobei der Spindelkopf ausgebildet ist zum Verbinden mit dem Kopfteil und zum Bewegen des Kopfteils entlang der Impfstellen-Längsachse.

Die Erfindung löst das Problem zudem durch ein Verfahren zum Entnehmen einer Impfdüse aus einem derartigen Impfsystem, das die folgenden Schritte aufweist: (a) Fixieren des Gestells relativ zu der Impfstelle, (b) Verbinden des Spindelkopfs mit dem Kopfteil der Impfdüsen-Entnahmevorrichtung, (c) Drehen der Spindel, sodass sich das Kopfteil vom Rohr wegbewegt, bis sich ein freies Ende der Impfdüse außerhalb eines Bewegungsraums eines Kükens des Absperrhahns befindet und (d) Schließen des Absperrhahns, sodass keine Fluid-Verbindung zwischen dem Rohr und der Impfdüse besteht.

Vorteilhaft an der Erfindung ist, dass die Impfdüse entnommen und inspiziert werden kann, ohne dass das Rohr abgesperrt werden muss. Das wiederum bedeutet, dass der Zeitpunkt und die Dauer der Entnahme der Impfdüse frei gewählt werden kann, was sowohl die Arbeitssicherheit erhöht als auch das Risiko drastisch verringert, dass die Versorgung mit dem Druck-Gas unterbrochen wird, weil sich die Entnahme der Impfdüse unvorhergesehen verzögert.

Vorteilhaft ist zudem, dass die Menge an Druck-Gas, die beim Entnehmen der Impfdüse in die Umgebung entweicht, in aller Regel reduziert werden kann. Der Grund hierfür ist, dass das Volumen, das druckentspannt werden muss, in der Regel deutlich kleiner ist als bei Systemen im Stand der Technik.

Im Rahmen der vorliegenden Beschreibung wird unter der Impfstelle insbesondere ein System verstanden, mittels dem ein Odoriermittel in das Druck-Gas, das im Rohr fließt, abgegeben werden kann (und im Betrieb des Impfsystems auch abgegeben wird).

Unter der Impfdüse wird insbesondere ein Bauteil verstanden, das ein freies Ende aufweist, das in den Gasstrom des Druck-Gases im Rohr hineinragt, sodass das Odoriermittel in den Gasstrom abgegeben wird. Die Impfstelle kann, was eine bevorzugte Ausführungsform darstellt, einen Odorierbehälter und eine Odoriermittelpumpe aufweisen, mittels der das Odoriermittel zur Impfdüse zugeführt wird.

Aufgrund des Gasdrucks, unter dem das Druck-Gas steht, wirkt eine Kraft auf die Impfdüse, die die Impfdüse vom Rohr wegdrückt. Diese Kraft wird von dem Kopfteil aufgenommen. Das Kopfteil ist reversibel befestigt. Würde das Kopfteil beim Betrieb entfernt, beispielsweise durch Entfernen von Flanschschrauben gelöst, würde die Impfdüse in aller Regel aus der Impfstelle herausgedrückt.

Unter dem Absperrhahn wird insbesondere eine Armatur verstanden, mittels der der Durchfluss des Druck-Gases vom Rohr zum Kopfteil freigegeben oder ganz gesperrt werden kann. Es ist möglich, nicht aber notwendig, dass der Absperrhahn auch als Ventil fungieren könnte. Maßgeblich ist, dass der Absperrhahn in der Lage ist, den Durchfluss zu sperren und freizugeben.

Unter dem Merkmal, dass das Gestell zum reversiblen Befestigen der Impfdüsen-Entnahmevorrichtung relativ zur Impfstelle ausgebildet ist, wird insbesondere verstanden, dass die Impfdüsen-Entnahmevorrichtung mittels des Gestells so montiert werden kann, dass sie nicht mehr relativ zur Impfstelle bewegt werden kann. Insbesondere ist das Gestell zum reversiblen Befestigen der Impfdüsen-Entnahmevorrichtung an der Impfstelle ausgebildet. Es ist jedoch auch möglich, dass die Impfdüsen-Entnahmevorrichtung beispielsweise am Rohr selbst befestigt wird.

Vorzugsweise handelt es sich um ein formschlüssiges Verbinden. Beispielsweise kann das Gestell eine Schelle aufweisen, mittels der es, beispielsweise an der Impfstelle, befestigt werden kann. Alternativ oder zusätzlich kann das Gestell eine Koppelstruktur aufweisen, die mit einer Gegen-Koppelstruktur der Impfstelle zum Verbinden zusammenwirkt. Bei der Koppelstruktur und der Gegen-Koppelstruktur kann es sich beispielsweise um Laschen handeln, die jeweilige Löcher aufweisen, sodass die beiden Koppelstrukturen mittels Schrauben miteinander verbunden werden können.

Unter dem Spindelkopf wird insbesondere ein Bauteil verstanden, das beim Drehen der Spindel in Längsrichtung entlang der Impfstellen-Längsachse bewegt wird. Vorzugsweise ist der Spindelkopf ausgebildet zum formschlüssigen Verbinden mit dem Kopfteil. Dies kann beispielsweise mittels eines Bolzens erfolgen.

Gemäß einer bevorzugten Ausführungsform ist zwischen dem Absperrhahn und dem Kopfteil eine Verbindungsleitung angeordnet, welche die Impfdüse umgibt. Diese Verbindungsleitung fungiert als Schleuse, die Verbindungsleitung könnte daher auch als Schleuse bezeichnet werden.

Günstig ist es, wenn die Impfstelle eine Stangendichtung zum Abdichten der Verbindungsleitung gegen die Impfdüse aufweist.

Der Absperrhahn ist so ausgebildet, dass er in eine Absperrstellung bringbar ist, wenn die Impfdüse nicht durch den Absperrhahn verläuft. Zudem ist der Absperrhahn gemäß einer bevorzugten Ausführungsform so ausgebildet, dass er nicht in die Schließstellung bringbar ist, wenn die Impfdüse durch den Absperrhahn verläuft.

Besonders günstig ist es, wenn der Absperrhahn ein Kugelhahn ist. Kugelhähne können bei besonders hohen Drücken sicher eingesetzt werden.

Der Kugelhahn hat vorzugsweise einen Grundkörper, der zwischen zwei Flanschen angeordnet ist. Günstig ist es, wenn ein Küken des Kugelhahns am Grundkörper befestigt ist. Unter dem Küken des Kugelhahns wird der Absperrkörper verstanden, wobei das Küken kugelförmig, kegelstumpfförmig oder zylinderförmig sein kann. Es ist zudem möglich, dass das Küken eine runde Außenkontur hat, um kugelförmig zu sein.

Vorzugsweise besitzt die Impfdüsen-Entnahmevorrichtung eine Hubbegrenzung zum Begrenzen eines Hubs des Spindelkopfs auf einen Maximal-Hub. Der Maximal-Hub ist vorzugsweise so gewählt, dass die Impfdüse stets in Kontakt mit der Stangendichtung ist. In diesem Fall ist es möglich, das Kopfteil zu lösen und die Impfdüse zu bewegen, ohne dass Druck-Gas austritt. Die Stangendichtung ist so ausgebildet, dass kein Druck-Gas entweicht.

Gemäß einer bevorzugten Ausführungsform besitzt die Impfstelle eine Entlüftungsarmatur zum Entlüften der Verbindungsleitung zwischen dem Absperrhahn und dem Kopfteil. Alternativ oder zusätzlich besitzt die Impfstelle vorzugsweise ein Manometer zum Messen Gasdrucks in der Verbindungsleitung.

Ein erfindungsgemäßes Verfahren umfasst vorzugsweise die Schritte eines Entlüftens der Verbindungsleitung und eines Entnehmens der Impfdüse. Der Begriff des Entnehmens bezieht sich auf das Bewegen der Impfdüse in eine Position, in der sie nicht mehr im Rohr angeordnet ist, sondern sich in einer Stellung befindet, in der sie inspiziert werden kann. Es ist möglich, nicht aber notwendig, dass die Impfdüse von der Impfstelle oder der Impfdüsen-Entnahmevorrichtung entnommen wird.

Beispielsweise umfasst das erfindungsgemäße Verfahren die Schritte eines Abmontierens der Impfdüsen-Entnahmevorrichtung von der Impfstelle und ein vollständiges Herausziehen der Impfdüse. Es ist dann möglich, die Impfdüse auszutauschen oder zu warten. Das Warten kann beispielsweise ein Reinigen, ein Austauschen eines Teils der Impfdüse oder ein Bearbeiten der Impfdüse umfassen.

Gemäß einer bevorzugten Ausführungsform umfasst das erfindungsgemäße Verfahren die Schritte eines Inspizierens und gegebenenfalls Austauschens der Impfdüse durch eine Austausch-Impfdüse.

Günstig ist, wenn das Verfahren die Schritte (a) Einführen der Impfdüse in die Stangendichtung, (b) Verbinden des Gestells mit der Impfstelle, (c) Einschieben der Impfdüse in die Verbindungsleitung, insbesondere mittels des Schraubgewindes, (d) Öffnen des Kugelhahns, (e) Einschieben der Impfdüse in das Rohr und (f) Befestigen des Kopfteils umfasst. Danach ist die Impfdüse montiert und es ist möglich, nicht aber notwendig, die Impfdüsen-Entnahmevorrichtung abzumontieren.

Im Folgenden wird die Erfindung anhand der beigefügten Zeichnungen näher erläutert. Dabei zeigt
- Figur 1: eine teilweise Explosionszeichnung eines erfindungsgemäßen Impfsystems mit einer erfindungsgemäßen Impfdüsen-Entnahmevorrichtung,
- Figur 2: eine perspektivische, maßstabsgerechte Ansicht des Impfsystems und der Impfdüsen-Entnahmevorrichtung gemäß Figur 1 und
- Figur 3: einen Querschnitt dadurch.

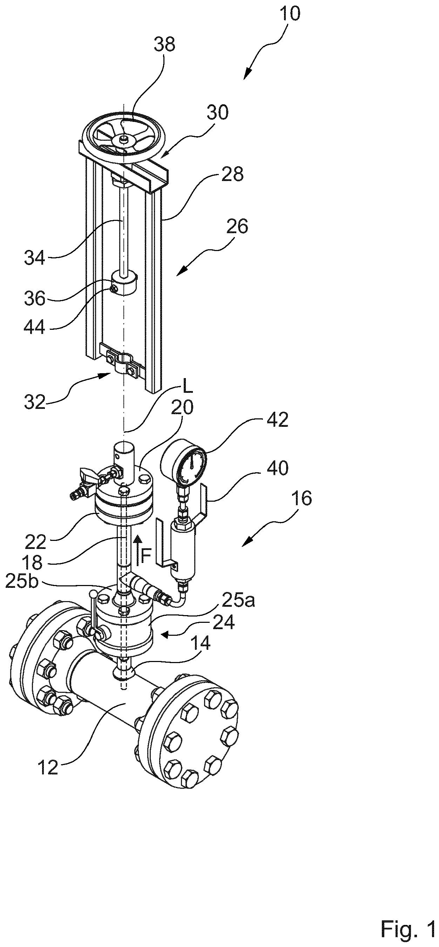

Figur 1 zeigt ein Impfsystem 10 für ein Rohr 12 für Druck-Gas, insbesondere Erdgas. Das Rohr 12 besitzt einen Anschluss 14 für eine Impfstelle 16. Bei dem Anschluss 14 kann es sich um einen Flansch, einen Ventilstutzen oder eine sonstige Struktur handeln, mittels der die Impfstelle 16 mit dem Rohr verbunden ist. Das Rohr 12 kann Teil des Impfsystems 10 sein, das ist aber nicht notwendig. Das Rohr 12 könnte auch als Gas-Rohr bezeichnet werden.

Die Impfstelle umfasst eine Impfdüse 18 und ein Kopfteil 20, an dem sich die Impfdüse 18 abstützt. Das Druck-Gas im Rohr 12 steht unter einem Gasdruck p, der zu einer Kraft F auf die Impfdüse 18 führt. Das Kopfteil 20 nimmt diese Kraft auf.

Das Kopfteil 20 ist an einer Verbindungsleitung 22 befestigt. Im vorliegenden Fall ist das Kopfteil 20 an der Verbindungsleitung 22 angeschraubt, es ist aber auch eine andere Art der Befestigung möglich.

Die Verbindungsleitung 22 verbindet das Kopfteil 20 mit einem Absperrhahn 24, der in der vorliegenden Ausführungsform durch einen Kugelhahn gebildet ist. Der Absperrhahn 24 besitzt einen Grundkörper 25a, der zwischen einem Flansch 25b und einem weiteren Flansch angeordnet ist.

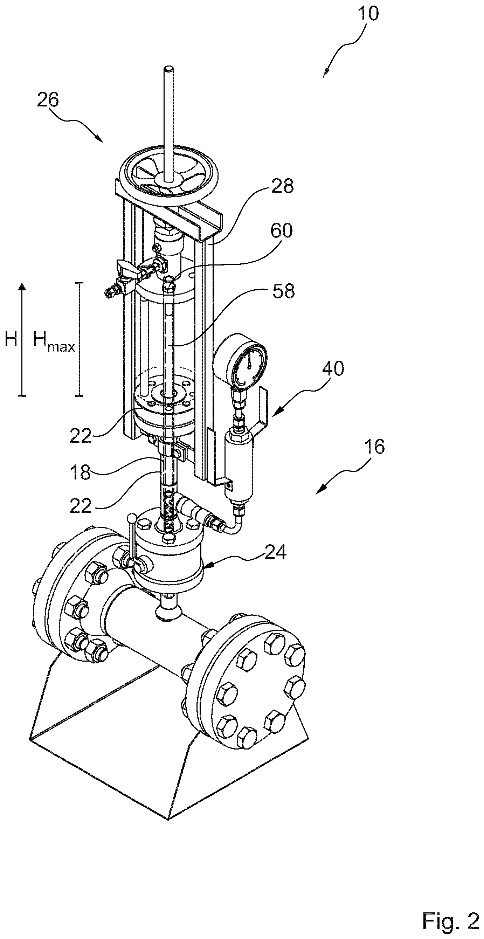

Figur 2 zeigt, dass sich die Impfdüse 18 in der in Figur 1 gezeigten Betriebsstellung der Impfstelle durch den Absperrhahn 24 erstreckt und in das Rohr 12 verläuft. Das Rohr 12 könnte auch als Gasleitung bezeichnet werden.

Das Impfsystem 10 besitzt eine Impfdüsen-Entnahmevorrichtung 26, die ein Gestell 28 und ein Schraubgetriebe 30 hat. Das Schraubgetriebe 30 könnte auch als Schraubantrieb bezeichnet werden. Das Gestell besitzt eine Koppelstruktur 32 zum Montieren an der Impfstelle 16. Im vorliegenden Fall ist die Koppelstruktur 32 durch eine Schelle gebildet. Es sind aber auch andere Koppelstrukturen möglich. Beispielsweise kann die Koppelstruktur eine gelochte Lasche aufweisen, die mit einer an der Impfstelle 16 angebrachten Gegen-Koppelstruktur, beispielsweise einer weiteren Lasche, verbunden werden kann, beispielsweise verschraubt, verstiftet, verhakt oder ähnliches.

Das Schraubgetriebe 30 umfasst eine Spindel 34, einen Spindelkopf 36 und ein Handrad 38. Das Handrad 38 ist entbehrlich und könnte beispielsweise durch eine Stange oder eine Verbindungsstruktur zum Verbinden mit einem Werkzeug, beispielsweise einem Schlüssel, ersetzt sein.

Die Impfdüse 18 besitzt eine Impfstellen-Längsachse L, entlang der sich der Spindelkopf 36 bewegt, wenn die Spindel 34 bewegt wird.

Figur 1 zeigt, dass die Impfstelle 16 eine Entlüftungsarmatur 40 besitzt, mittels der die Verbindungsleitung 22 entlüftet werden kann. Unter einem Entlüften wird verstanden, dass der Druck in der Verbindungsleitung 22 auf den gleichen Druck gebracht wird wie ein Umgebungsdruck. Die Entlüftungsarmatur 40 umfasst im vorliegenden Fall ein Ventil, es ist aber auch möglich, dass sie einen Absperrhahn aufweist. Die Impfstelle 16 besitzt zudem ein Manometer 42 zum Messen des Drucks in der Verbindungsleitung 22.

Zum Durchführen eines erfindungsgemäßen Verfahrens wird zunächst das Gestell 28 mittels seiner Koppelstruktur 32 relativ zu der Impfstelle 16, im vorliegenden Fall an der Impfstelle 16, fixiert. Zudem wird der Spindelkopf 36 mit dem Kopfteil 20 verbunden. Das erfolgt im vorliegenden Fall mittels eines Bolzens 44, der aus Sicherheitsgründen mit Muttern gesichert werden kann.

Nachfolgend wird die Spindel 34 mit Hilfe des Handrads 38 gedreht, sodass sich die Impfdüse 18 vom Rohr 12 und von der Verbindungsleitung 22 weg bewegt.

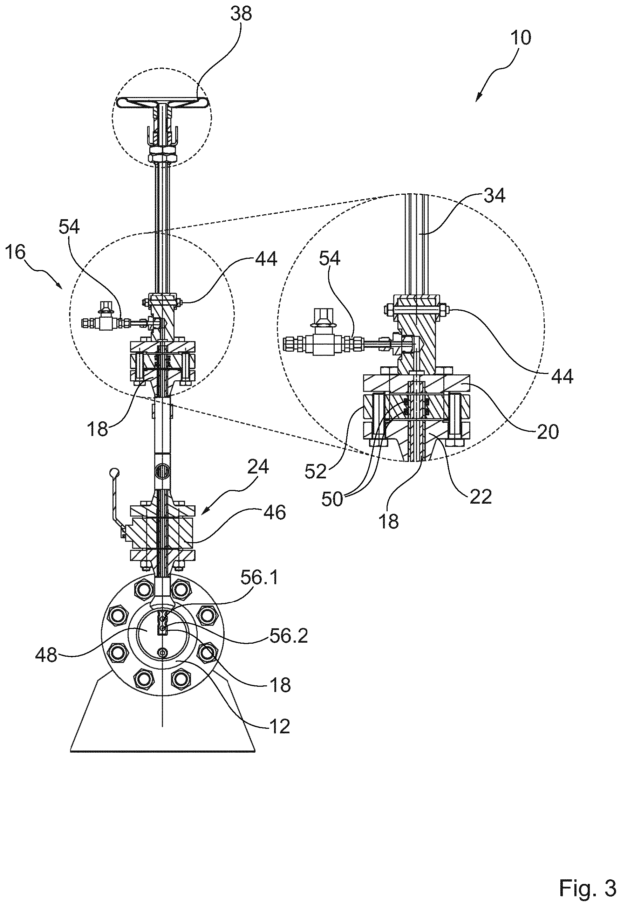

Figur 2 zeigt das Impfsystem 10, bei dem die Impfdüse 18 so weit bewegt wurde, dass sie sich außerhalb eines Bewegungsraums eines Absperrkörpers 46 (vgl. Figur 3) des Absperrhahns 24 befindet. In einem nachfolgenden Schritt wird der Absperrhahn 24 geschlossen. In diesem Zustand kann kein Druck-Gas mehr aus dem Rohr 12 in die Verbindungsleitung 22 gelangen. Durch Betätigen der Entlüftungsarmatur 40 wird die Verbindungsleitung 22 entlüftet. In einem nachfolgenden Schritt kann das Gestell 28 abmontiert und die Impfdüse 18 entnommen werden.

Figur 3 zeigt einen Querschnitt durch das Impfsystem 10. Es ist zu erkennen, dass die Impfdüse 18 in das Rohr 12 hineinragt, in dem Druck-Gas 48 strömt. In der in Figur 3 gezeigten Situation ist der Absperrhahn 24 geöffnet, sodass die Impfdüse 18 durch den Absperrkörper 46 hindurch oder an ihm vorbei verläuft. Das Kopfteil 20 ist mit der Verbindungsleitung 22 reversibel verbunden, im vorliegenden Fall verschraubt. Die Impfstelle 16 umfasst eine Stangendichtung 50, mittels der die Verbindungsleitung 22 gegen die Impfdüse 18 abgedichtet ist. In anderen Worten ist die Stangendichtung so angeordnet, dass Druck-Gas in der Verbindungsleitung 22 nicht an der Impfdüse 18 vorbei in die Umgebung strömen kann.

Im vorliegenden Fall ist die Stangendichtung 50 Teil einer Flanschplatte 52. Es ist aber auch möglich, die Stangendichtung 50 an einer anderen Stelle benachbart zum Kopfteil 20 an der Verbindungsleitung 22 anzuordnen.

Über eine Odorierstoff-Zuleitung 54 wird im Betrieb Odorierstoff zur Impfdüse 18 zugeführt, der die Impfdüse 18 durch die Öffnungen 56.1, 56.2, ... verlässt und so in das Druck-Gas 48 im Rohr 12 gelangt.

Figur 2 zeigt, dass die Impfdüsen-Entnahmevorrichtung 26 eine Hubbegrenzung 58 aufweist. Im vorliegenden Fall ist diese Hubbegrenzung 58 gebildet durch eine Stange, die ein Loch im Kopfteil 20 durchgreift und einen Kopf 60 aufweist. Der Kopf 60 ist so groß, dass er nicht durch die Ausnehmung passt.

Wird das Kopfteil 20 um einen Hub H vom Rohr 12 wegbewegt, so schlägt das Kopfteil 20 an, wenn es um einen Maximal-Hub Hₘₐₓ von der Verbindungsleitung 22 entfernt ist. Die Länge der Hubbegrenzung 58 ist so gewählt, dass die Impfdüse 18 stets von der Stangendichtung 50 (vgl. Figur 3) abgeholt wird. In anderen Worten kann bei geschlossener Entlüftungsarmatur 40 kein Gas aus der Verbindungsleitung 22 austreten, auch wenn das Kopfteil 20 bewegt wird.

Wie oben beschrieben, wird zunächst die Impfdüsen-Entnahmevorrichtung 26 relativ zur Impfstelle 16 befestigt, wenn das Kopfteil 20 das Schraubgetriebe 30 von der Verbindungsleitung 22 wegbewegt, bis die Impfdüse 18 nicht mehr durch den Absperrhahn 24 verläuft. Die Stangendichtung 50 verhindert dabei, dass Druck-Gas entweichen kann.

Nachfolgend wird der Absperrhahn 24 geschlossen und die Verbindungsleitung 22 mittels der Entlüftungsarmatur 40 entlüftet. Danach wird das Gestell 28 entfernt und die Impfdüse 18 kann entnommen werden. Alternativ ist es möglich, den Kopf 60 zu entfernen und danach das Kopfteil mittels des Schraubgetriebes 30 weiter zu bewegen, bis die Impfdüse 18 entnommen werden kann.

Nachfolgend kann die Impfdüse inspiziert, gewartet oder durch eine Austausch-Impfdüse ersetzt werden. Nachfolgend wird die Impfdüse in die Stangendichtung 50 eingeführt und die Impfdüsen-Entnahmevorrichtung 26 erneut an der Impfstelle 16 montiert. Die Entlüftungsarmatur 40 wird geschlossen, das Kopfteil 20 auf das Rohr 12 mittels des Schraubgetriebes 30 zu bewegt, der Absperrhahn 24 geöffnet und danach das Kopfteil 20 mit der Verbindungsleitung 22 verbunden, insbesondere verschraubt. Auf die geschilderte Weise kann Impfdüse 18 gewartet werden, ohne dass der Gasstrom im Rohr 12 unterbrochen werden muss.

Erfindungsgemäß ist zudem eine Verwendung dieser Impfdüsen-Entnahmevorrichtung 26 zum Entnehmen einer Impfdüse 18 aus dem Impfsystem 10.

**Bezugszeichenliste**

| | | | |
|---|---|---|---|
| 10 | Impfsystem | P | Gasdruck |
| 12 | Rohr | H | Hub |
| 14 | Anschluss | Hₘₐₓ | Maximal-Hub |
| 16 | Impfstelle | L | Im pfstellen-Längsachse |
| | | F | Kraft |
| 18 | Impfdüse | | |
| 20 | Kopfteil | | |
| 22 | Verbindungsleitung (Schleuse) | | |
| 24 | Absperrhahn | | |
| 25a | Grundkörper | | |
| 25b | Flansch | | |
| 26 | Impfdüsen-Entnahmevorrichtung | | |
| 28 | Gestell | | |
| | | | |
| 30 | Schraubgetriebe | | |
| 32 | Koppelstruktur | | |
| 34 | Spindel | | |
| 36 | Spindelkopf | | |
| 38 | Handrad | | |
| | | | |
| 40 | Entlüftungsarmatur | | |
| 42 | Manometer | | |
| 44 | Bolzen | | |
| 46 | Absperrkörper | | |
| 48 | Druck-Gas | | |
| | | | |
| 50 | Stangendichtung | | |
| 52 | Flanschplatte | | |
| 54 | Odorierstoff-Zuleitung | | |
| 56 | Öffnung | | |
| 58 | Hubbegrenzung | | |
| | | | |
| 60 | Kopf | | |

## Patentansprüche

1. Impfsystem (10) für ein Rohr (12) für Druck-Gas (48), insbesondere für komprimiertes Erdgas, mit
(a) einer Impfstelle (16), die
(i) eine Impfdüse (18) und
(ii) ein Kopfteil (20), an dem sich die Impfdüse (18) abstützt, aufweist,
**dadurch gekennzeichnet, dass**
(b) die Impfstelle (16)
(i) einen Absperrhahn (24), insbesondere einen Kugelhahn, aufweist und
(ii) die Impfdüse (18) durch den Absperrhahn (24) in das Rohr (12) verläuft und sich entlang einer Impfstellen-Längsachse (L) erstreckt, und dass
(c) das Impfsystem (10) eine Impfdüsen-Entnahmevorrichtung (26) besitzt, die
(i) ein Gestell (28) zum reversiblen Befestigen der Impfdüsen-Entnahmevorrichtung (26) relativ zu der Impfstelle (16) und
(ii) ein Schraubgetriebe (30), das eine Spindel (34) und einen Spindelkopf (36) hat, aufweist,
(iii) wobei der Spindelkopf (36) zum Verbinden mit dem Kopfteil (20) und zum Bewegen des Kopfteils (20) entlang der Impfstellen-Längsachse (L) ausgebildet ist.

2. Impfsystem nach Anspruch 1, **dadurch gekennzeichnet, dass**
(a) zwischen dem Absperrhahn (24) und dem Kopfteil (20) eine Verbindungsleitung (22) angeordnet ist, welche die Impfdüse (18) umgibt, und
(b) die Impfstelle (16) eine Stangendichtung (50) zum Abdichten der Verbindungsleitung (22) gegen die Impfdüse (18) aufweist.

3. Impfsystem nach einem der vorstehenden Ansprüche, **dadurch gekennzeichnet, dass** der Absperrhahn (24) ein Kugelhahn ist.

4. Impfsystem nach Anspruch 2 oder 3, **dadurch gekennzeichnet, dass**
(a) die Impfdüsen-Entnahmevorrichtung (26) eine Hubbegrenzung (58) zum Begrenzen eines Hubs des Spindelkopfs (36) auf einen Maximal-Hub (Hubₘₐₓ) aufweist und
(b) der Maximal-Hub (Hubₘₐₓ) so gewählt ist, dass die Impfdüse (18) stets in Kontakt mit der Stangendichtung (50) ist.

5. Impfsystem nach einem der vorstehenden Ansprüche, **gekennzeichnet durch**
(a) eine Entlüftungsarmatur (40) zum Entlüften der Verbindungsleitung (22) zwischen dem Absperrhahn (24) und dem Kopfteil (20) und/oder
(b) ein Manometer (42) zum Messen eines Gasdrucks (p) in der Verbindungsleitung (22).

6. Impfsystem nach einem der vorstehenden Ansprüche, **gekennzeichnet durch**
(a) ein Rohr (12) für Druck-Gas (48), das Erdgas führt,
(b) wobei das Impfsystem (10) an dem Rohr (12) befestigt ist.

7. Verfahren zum Entnehmen einer Impfdüse (18) aus einer Impfsystem (10) nach Anspruch 1, **gekennzeichnet durch** die Schritte:
(a) Fixieren des Gestells (28) relativ zu der Impfstelle (16),
(b) Verbinden des Spindelkopfs (36) mit dem Kopfteil (20),
(c) Drehen der Spindel (34), sodass sich das Kopfteil (20) vom Rohr (12) weg bewegt, bis sich ein freies Ende der Impfdüse (18) außerhalb eines Bewegungsraums eines Absperrkörpers (46) des Absperrhahns (24), insbesondere eines Absperrkörpers (46) eines Kugelhahns, befindet, und
(d) Schließen des Absperrhahns (24), insbesondere des Kugelhahns, sodass keine Fluid-Verbindung zwischen dem Rohr (12) und der Impfdüse (18) existiert.

8. Verfahren nach Anspruch 7, **gekennzeichnet durch** die Schritte:
(a) Entlüften der Verbindungsleitung (22) zwischen dem Absperrhahn (24) und dem Kopfteil (20) und
(b) Entnehmen der Impfdüse (18).

9. Verfahren nach Anspruch 8, **gekennzeichnet durch** die Schritte:
(a) Einführen der Impfdüse (18) in die Stangendichtung (50),
(b) Verbinden des Gestells (28) mit der Impfstelle (16),
(c) Einschieben der Impfdüse (18) in die Verbindungsleitung (22),
(d) Öffnen des Kugelhahns,
(e) Einschieben der Impfdüse (18) in das Rohr (12),
(f) Befestigen des Kopfteils (20).

## Claims

1. An injection system (10) for a pipe (12) for compressed gas (48), particularly compressed natural gas, with
(a) an injection point (16) that comprises
(i) an injection nozzle (18) and
(ii) a head part (20) which supports the injection nozzle (18),
**characterised in that**
(b) the injection point (16)
(i) comprises a stopcock (24), particularly a ball valve, and
(ii) the injection nozzle (18) passes through the stopcock (24) into the pipe (12) and extends along an injection point longitudinal axis (L), and that
(c) the injection system (10) features a injection nozzle removal device (26) which comprises
(i) a frame (28) for reversibly fixing the injection nozzle removal device (26) relative to the injection point (16), and
(ii) a worm drive (30) that has a spindle (24) and a spindle head (36),
(iii) wherein the spindle head (36) is designed to connect to the head part (20) and to move the head part (20) along the injection point longitudinal axis (L).

2. The injection system according to claim 1, **characterised in that**
(a) a connection line (22) is arranged between the stopcock (24) and the head part (20), said connection line surrounding the injection nozzle (18), and
(b) the injection point (16) comprises a rod seal (50) for sealing the connection line (22) against the injection nozzle (18).

3. The injection system according to one of the preceding claims, **characterised in that** the stopcock (24) is a ball valve.

4. The injection system according to claim 2 or 3, **characterised in that**
(a) the injection nozzle removal device (26) has a stroke limiter (58) for limiting a stroke of the spindle head (36) to a maximum stroke (Hubₘₐₓ), and
(b) the maximum stroke (Hubₘₐₓ) is selected in such a way that the injection nozzle (18) is always in contact with the rod seal (50).

5. The injection system (10) according to one of the preceding claims, **characterised by**
(a) a vent fitting (40) for ventilating the connection line (22) between the stopcock (24) and the head part (20), and/or
(b) a pressure gauge (42) for measuring a gas pressure (p) in the connection line (22).

6. The injection system (10) according to one of the preceding claims, **characterised by**
(a) a pipe (12) for compressed gas (48) which conducts natural gas,
(b) wherein the injection system (10) is fixed to the pipe (12).

7. A method for removing an injection nozzle (18) from an injection system (10) according to claim 1, **characterised by** the steps:
(a) fixing the frame (28) relative to the injection point (16),
(b) connecting the spindle head (36) to the head part (20),
(c) rotating the spindle (34) so that the head part (20) moves away from the pipe (12) until a free end of the injection nozzle (18) is located outside of a movement range of a shut-off body (46) of the stopcock (24), in particular a shut-off body (46) of a ball valve, and
(d) closing the stopcock (24), particularly the ball valve, so that there is no fluid connection between the pipe (12) and the injection nozzle (18).

8. The method according to claim 7, **characterised by** the steps:
(a) ventilating the connection line (22) between the stopcock (24) and the head part (20), and
(b) removing the injection nozzle (18).

9. The method according to claim 8, **characterised by** the steps:
(a) inserting the injection nozzle (18) into the rod seal (50),
(b) connecting the frame (28) to the injection point (16),
(c) inserting the injection nozzle (18) into the connection line (22),
(d) opening the ball valve,
(e) inserting the injection nozzle (18) into the pipe (12),
(f) fixing the head part (20).

## Revendications

1. Système d'injection (10) pour un tube (12) à gaz sous pression (48), en particulier à gaz naturel comprimé, comportant
(a) un emplacement d'injection (16) comprenant
(i) une buse d'injection (18) et
(ii) une partie de tête (20) contre laquelle s'appuie la buse d'injection (18),
**caractérisé en ce que**
(b) l'emplacement d'injection (16)
(i) présente un robinet d'arrêt (24), en particulier un robinet à bille, et
(ii) la buse d'injection (18) passe à travers le robinet d'arrêt (24) jusque dans le tube (12) et s'étend le long d'un axe longitudinal (L) de l'emplacement d'injection, et **en ce que**
(c) le système d'injection (10) possède un dispositif de retrait de buse d'injection (26), comprenant
(i) un cadre (28) pour la fixation réversible du dispositif de retrait de buse d'injection (26) par rapport à l'emplacement d'injection (16) ; et
(ii) un engrenage hélicoïdal (30) qui présente une broche (34) et une tête de broche (36),
(iii) ladite tête de broche (36) étant réalisée pour se relier à ladite partie de tête (20) et pour déplacer ladite partie de tête (20) le long de l'axe longitudinal (L) de l'emplacement d'injection.

2. Système d'injection selon la revendication 1, **caractérisé en ce que**
(a) un conduit de liaison (22) est disposé entre le robinet d'arrêt (24) et la partie de tête (20) et entoure la buse d'injection (18), et
(b) l'emplacement d'injection (16) comprend un joint d'étanchéité de tige (50) pour rendre étanche le conduit de liaison (22) par rapport à la buse d'injection (18).

3. Système d'injection selon l'une des revendications précédentes, **caractérisé en ce que** le robinet d'arrêt (24) est un robinet à bille.

4. Système d'injection selon la revendication 2 ou 3, **caractérisé en ce que**
(a) le dispositif de retrait de buse d'injection (26) comprend un limiteur de course (58) pour limiter une course de la tête de broche (36) à une course maximale (courseₘₐₓ), et
(b) la course maximale (courseₘₐₓ) est choisie de telle sorte que la buse d'injection (18) soit toujours en contact avec le joint d'étanchéité de tige (50).

5. Système d'injection selon l'une des revendications précédentes, **caractérisé par**
(a) une garniture de purge (40) pour purger le conduit de liaison (22) entre le robinet d'arrêt (24) et la partie de tête (20), et/ou
(b) un manomètre (42) pour mesurer une pression de gaz (p) dans le conduit de liaison (22).

6. Système d'injection selon l'une des revendications précédentes, **caractérisé par**
(a) un tube (12) à gaz sous pression (48), qui achemine du gaz naturel,
(b) le système d'injection (10) étant fixé au tube (12).

7. Procédé de retrait d'une buse d'injection (18) hors d'un système d'injection (10) selon la revendication 1, **caractérisé par** les étapes consistant à :
(a) fixer le cadre (28) par rapport à l'emplacement d'injection (16),
(b) relier la tête de broche (36) à la partie de tête (20),
(c) faire tourner la broche (34), de sorte que la partie de tête (20) s'éloigne du tube (12) jusqu'à ce qu'une extrémité libre de la buse d'injection (18) soit à l'extérieur d'un espace de mouvement d'un corps d'arrêt (46) du robinet d'arrêt (24), en particulier d'un corps d'arrêt (46) d'un robinet à bille, et
(d) fermer le robinet d'arrêt (24), en particulier le robinet à bille, de sorte qu'il n'existe aucune communication de fluide entre le tube (12) et la buse d'injection (18).

8. Procédé de la revendication 7, **caractérisé par** les étapes consistant à :
(a) purger le conduit de liaison (22) entre le robinet d'arrêt (24) et la partie de tête (20), et
(b) retirer la buse d'injection (18).

9. Procédé de la revendication 8, **caractérisé par** les étapes consistant à :
(a) introduire la buse d'injection (18) dans le joint d'étanchéité de tige (50),
(b) relier le cadre (28) à l'emplacement d'injection (16),
(c) insérer la buse d'injection (18) dans le conduit de liaison (22),
(d) ouvrir le robinet à bille,
(e) insérer la buse d'injection (18) dans le tube (12),
(f) fixer la partie de tête (20).
